Europäisches Patentamt

European Patent Office

Office européen des brevets

(11) Publication number: **0 057 109**
**B1**

# EUROPEAN PATENT SPECIFICATION

(45) Date of publication of patent specification: **05.12.84**

(51) Int. Cl.³: **B 67 D 1/08**

(21) Application number: **82300424.7**

(22) Date of filing: **27.01.82**

(54) Improved locking ring.

<table>
<tr><td>

(30) Priority: **28.01.81 GB 8102534**

(43) Date of publication of application:
**04.08.82 Bulletin 82/31**

(45) Publication of the grant of the patent:
**05.12.84 Bulletin 84/49**

(84) Designated Contracting States:
**BE DE FR GB IT NL**

(56) References cited:
**GB-A-1 006 224**
**US-A-3 065 885**
**US-A-3 454 199**
**US-A-3 473 556**

</td><td>

(73) Proprietor: **UNIVERSAL EQUIPMENT CO (LONDON) LTD**
**Belvue Works Green Lane**
**Hounslow Middlesex TW4 6DJ (GB)**

(72) Inventor: **Cook, Robert Bernard**
**"Frogmore" Camp End Road**
**St. Georges Hill Weybridge Surrey (GB)**

(74) Representative: **Wilson, Joseph Martin et al**
**WITHERS & ROGERS 4 Dyer's Buildings Holborn**
**London EC1N 2JT (GB)**

</td></tr>
</table>

Courier Press, Leamington Spa, England.

## Description

This invention broadly relates to apparatus for delivering a liquid from a container to a dispenser. One example of the apparatus which we have in mind is apparatus for delivering beer from a keg to a dispensing tap.

For many years beer was delivered from the brewery to the public house in wooden casks and what was called a beer engine was used to pump the beer from the cask to a dispenser. Then so called keg bitter was developed and the beer is often now delivered in metal casks with a closed valve at the top. At the public house a connector is attached to the valve and the connector is then operated so that the valve is opened and the beer can be dispensed. The valve mechanism and the connector are well known and it might be thought that little difficulty would be experienced with such equipment. However one problem that has arisen is that it has been found that a part of the connector can be used as a tool to open the valve on the cask by removing a locking ring. This is dangerous from two points of view:—

a) the beer inside the keg may be under high pressure and may injure someone who is trying to tamper with the valve.

b) If the valve be removed so that a drayman can have an unauthorised drink the beer in the keg may become contaminated.

It is therefore an object of the invention to provide an improved form of valve which will not allow the connector to be used as a tool for removing the locking ring of the valve mechanism.

Another difficulty is that the connector includes sealing means including a resilient washer that is expanded as the connector is connected to the valve which is normally done by screwing the connector into the valve. This works very well but if the connector be screwed too tightly into the valve it has been found that the mechanism locks solid and it is then very difficult to disconnect the connector from the valve when the keg to which the valve is connected is empty.

Another object of the invention is therefore to provide means to prevent the connector being screwed so tightly on to the valve mechanism as to cause the two to be virtually locked together.

In known apparatus the locking ring which holds the valve mechanism in position within another casing is substantially smooth at the top and has arcuate teeth, usually a pair, which are inclined on the underside to locate the connector and expand and seal the resilient washer. The locking ring also has two arcuate cut outs or openings between the teeth which may be used when screwing the locking ring into position, the two ends of each arcuate cut out or opening being substantially vertical. It is these cut outs or openings which enable the connector to be used as a tool to remove the locking ring in an unauthorised way.

So that the scope of the present invention may be fully understood it may be mentioned that USA Patent Specification No. 3473556 describes a beer keg tapping device including a tapping valve and an outer fitting with the tapping valve having a beer passageway extending therethrough. The passageway has an outwardly flared portion adjacent the outlet thereof. The tapping valve is releasably secured to the beer keg and a valve element is movable axially within the beer passageway to selectively open and close the beer passageway. The outer fitting includes an elongated probe receivable within the outwardly flared portion of the passageway and engageable with the valve element to move the valve element to open the beer passageway. The probe has a beer passageway therein and a skirt-type seal adjacent the inner end of the probe. The seal is engageable with the outwardly flared portion of the beer passageway of the tapping valve and as the probe is moved axially, the skirt seal is cammed radially inwardly to form a very tight probe-to-tapping valve seal before the beer passageway is opened. The tapping valve is secured to the beer keg by co-operating lug members on both of the keg and the outer fitting and by a pair of tabs driven through apertures in the tapping valve and engageable with projections or ribs on the keg.

According to a feature of the invention we provide a valve mechanism with a special form of locking ring that can be removed only by using a special tool designed to fit and to remove the ring. Our new locking ring has arcuate teeth and arcuate cut outs or openings as before but as the teeth merge into the cut outs or openings at one end of each tooth we provide an inclined surface, the inclined surface being so positioned that any attempt to use the connector as a tool to remove the locking ring is frustrated because the connector simply rises up on the incline and does not turn the ring to unscrew it.

Therefore according to one aspect of the invention there is provided a valve mechanism for application to a liquid container such as a beer keg to enable liquid in the container to be dispensed through a connector by the application of top pressure to the liquid within the container wherein the valve mechanism includes a locking ring by means of which the connector may be secured in position on the valve mechanism and wherein the locking ring has arcuate teeth which are inclined the underside and arcuate openings between the teeth characterised in that the teeth of the locking ring are specially shaped for cooperation only with a specially shaped authorised unlocking tool adapted to fit the locking ring and in that the special shaping of the locking ring includes the provision of inclined surfaces between the teeth and the openings so that the teeth merge into the openings at one end of each tooth, the inclined surface being so positioned that an unauthorised tool simply rises up on the inclined surfaces and does not turn the locking ring.

The invention also includes a locking ring for use in a valve mechanism for application to a liquid container to enable liquid to be dispensed through a connector by the application of top pressure to the liquid within the container wherein the locking ring is adapted to secure the connector in position by the provision of arcuate teeth which are inclined on the underside and arcuate openings between the teeth characterised in that the teeth of the locking ring are specially shaped for co-operation only with a specially shaped authorised unlocking tool adapted to fit the locking ring and in that the special shaping of the locking ring includes the provision of inclined surfaces between the teeth and the openings so that the teeth merge into the openings at one end of each tooth, the inclined surfaces being so positioned that an unauthorised tool simply rises up on the inclined surfaces and does not turn the locking ring.

According to another feature of the invention the locking ring is provided with a stop or stops adapted to engage with a lug normally provided on a lug ring on the connector so that when the connector is being applied to the valve a stop on the locking ring engages with a lug on the lug ring before the connector can be turned too far. In this way it is almost impossible to turn the connector so far that it cannot easily be removed when it is necessary to apply the connector to a new cask.

In order that the invention may be more clearly understood reference is now directed to the accompanying drawings given by way of example in which:—

Figure 1 is a longitudinal sectional view of a known form of valve mechanism or down tube assembly as it is known in the trade. This part of the equipment is fitted to a beer keg at the brewery so that a keg should arrive at a public house with this equipment in position,

Figure 2 is a longitudinal sectional view of a known form of connector usually called a lever type connector in the trade. At the public house the keg is usually placed in the cellar and a cellar man connects the connector to the valve mechanism shown in Figure 1 by a downward and turning movement,

Figures 3a, 3b and 3c are detail views of a known form of locking ring for application to the valve mechanism at the brewery.

Figures 4a, 4b and 4c are detail views of the new form of locking ring according to the invention,

Figure 5 is a pictorial view of the new form of locking ring, similar to Figure 4C, but illustrating a ring with three teeth and three openings; and

Figures 6a and 6b are views of a special locking tool for use with the new form of locking ring as illustrated in Figures 4a, 4b and 4c.

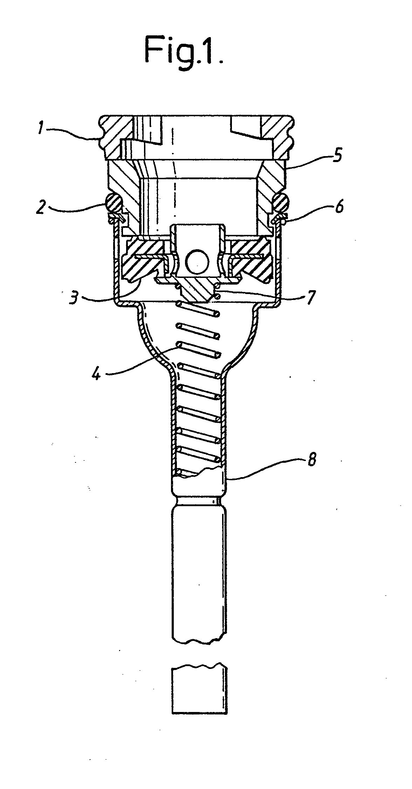

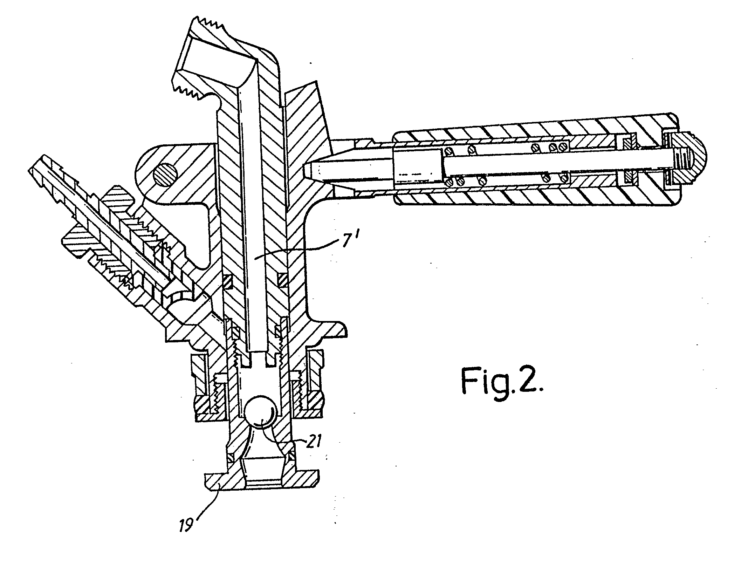

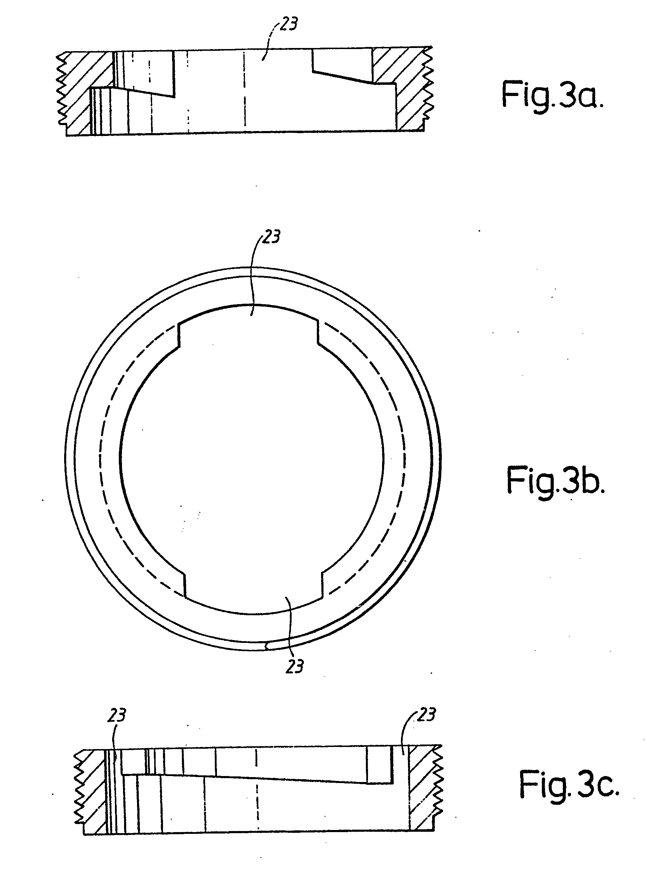

Referring to the drawings Fig. 1 shows a valve mechanism including a locking ring 1, a centre sleeve seal 2, a rubber valve 3, a spring 4, a centre sleeve 5, a circlip 6, a beer or other liquid valve 7 and a depending spear 8. The operation of this equipment is well known and will not be described in detail. The principle is that when top pressure is applied to the liquid e.g. beer in the keg and when the valve 7 is open i.e. lowered against the action of the spring, the beer will flow up the spear 8 and through the valve. The beer flows through the locking ring into the lever type connector shown in Fig. 2 and up through a ball valve 21 into a centre 7' and so to a beer dispenser in the bar. The connector has a valve housing 19 which terminates at its lower end in two horizontal lugs that are inserted into the locking ring through the arcuate cut-outs or openings which are shown at 23 in Fig. 3. After insertion the connector is turned clockwise (viewed from the top) to secure the connector in position. It is thus turning movement that can be overdone by an over zealous cellar man.

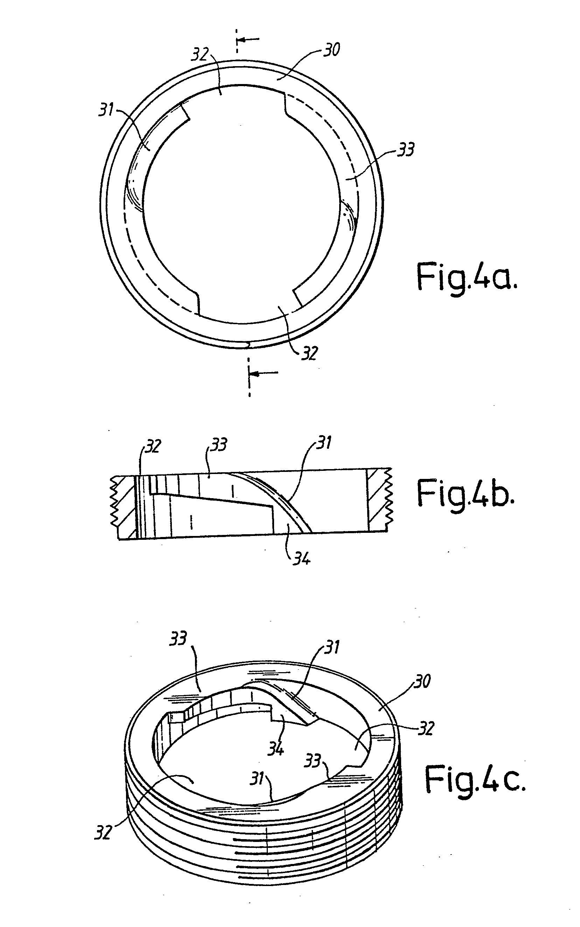

Fig. 4 shows a locking ring 30 with arcuate teeth 33 and arcuate openings 32 between the teeth, the openings merging into the teeth as shown by an inclined or sloping shoulder 31 so positioned that any attempt to unscrew the locking ring 30 by a normal tool is frustrated because the tool simply runs up the incline. Looking at the locking ring from above therefore the inclined or sloping shoulder 31 is at the right hand end of each tooth or at the left hand end of each opening.

The shoulder 31 may be a simply inclined straight surface but we prefer to make the shoulders 31 so that they each form a part of a helix so that the inclined surface merges gently into the top of the adjacent tooth.

The feature of the invention therefore comprises an improved form of locking ring and also a valve mechanism including an improved form of locking ring. It will be understood that the locking ring is secured to the valve mechanism at the brewery by using a special tool devised for the purpose and that the locking ring is not thereafter removed until the keg is returned to the brewery whereupon the special tool can be used to remove the locking ring to enable the valve mechanism to be removed for periodical maintainance. (Cleaning and refilling can be carried out with the valve in situ.)

In order to prevent the connector being screwed too tightly into the valve mechanism we may provide, according to the second feature of the invention a stop or as illustrated stops 34 below each of the inclined surfaces. The stops, or one of them, engage(s) with the lugs on the lug ring and so prevent over tightening of the connector when applied to the valve mechanism.

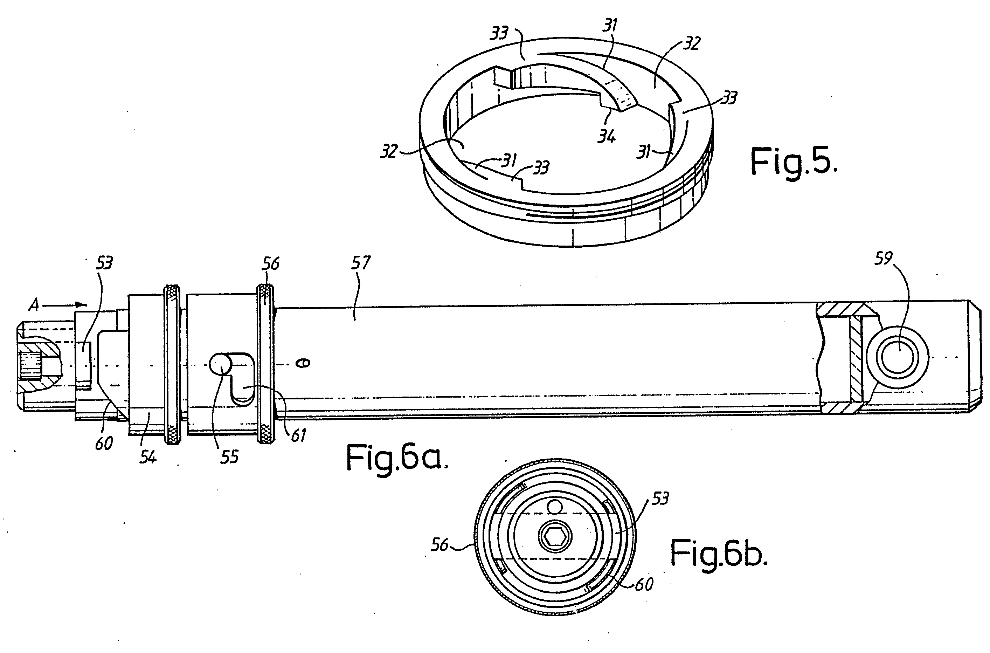

While we have described the invention mainly in relation to beer kegs—and by beer we include bitter and other forms of ale, lager and stout—it will be understood that the invention may be used with other equipment e.g. apparatus for dispensing other beverage liquids such as cider as well as other liquids when required. To complete the description of the invention it should be understood that a locking ring with two teeth or lugs 33 and two openings 32 has been given purely by way of example. For some purposes it may be useful to use three or even four teeth 33 with a corresponding number of openings between the teeth and by way of example of Figure 5 illustrates an embodiment of locking ring with three teeth and three openings.

Finally reference has been made above to the use of a special tool shaped to fit the locking ring so that the locking ring can be unlocked only by means of the special tool which can be regarded as a key to unlock the ring by unscrewing it from the rest of the valve mechanism. Figure 6 is a view of the special tool for use with the locking ring illustrated in Figure 4.

Although in Figure 4 quite a long thread has been shown it will be realised that a short or long thread, as desired, may be used to connect the ring to the body of the valve mechanism.

The operation of the unlocking tool shown in Fig. 6 is as follows. A slideable sleeve 56 and a slideable drive collar 54 are moved up i.e. to the right in Figure 6 to the position in which they are shown and the tool is then ready for insertion into the locking ring. The main body 57 of the unlocking tool has a rectangular projection or lug 53 which is shaped to fit the openings 32 in the locking ring 30 and the lug 53 is accordingly pressed into one of the openings 32. The unlocking tool is then turned in a clockwise direction until the lug 53 contacts one of the stops 34 on the locking ring 30. The drive collar 54 is then turned in a clockwise direction so as to mesh a helix 60 on collar 54 with one of the helical sloping shoulders 31 on the locking ring 30. The slideable sleeve 56 is then pressed down and turned clockwise which locks the drive collar 54 in its down position i.e. to the left in Figure 6 due to the engagement of a pin 55 on the body in slot 61 in sleeve 56. The unlocking tool is now ready to remove the locking ring 30 and to do that the unlocking tool is turned anti-clockwise by means of a tommy bar 59 so that the sleeve 56 is turned anti-clockwise and is pulled upwards, i.e. to the right in Figure 6, and the drive collar is also pulled upwards. This has the effect of rotating the locking ring 30 clockwise and it is thus released and extracted from the valve.

**Claims**

1. A valve mechanism for application to a liquid container such as a beer keg to enable liquid in the container to be dispensed through a connector by the application of top pressure to the liquid within the container wherein the valve mechanism includes a locking ring (30) by means of which the connector may be secured in position on the valve mechanism and wherein the locking ring (30) has arcuate teeth (33) which are inclined on the underside and arcuate openings (32) between the teeth (33) characterised in that the teeth (33) of the locking ring (30) are specially shaped for co-operation only with a specially shaped authorised unlocking tool adapted to fit the locking tool adapted to fit the locking ring (30) and in that the special shaping of the locking ring (30) includes the provision of inclined surfaces (31) between the teeth (33) and the openings (32) so that the teeth (33) merge into the openings (32) at one end of each tooth, the inclined surfaces (31) being so positioned that an unauthorised tool simply rises up on the inclined surfaces and does not turn the locking ring.

2. A locking ring (30) for use in a valve mechanism for application to a liquid container to enable liquid to be dispensed through a connector by the application of top pressure to the liquid within the container wherein the locking ring (30) is adapted to secure the connector in position by the provision of arcuate teeth (33) which are inclined on the underside and arcuate openings (32) between the teeth (33) characterised in that the teeth (33) of the locking ring (30) are specially shaped for co-operation only with a specially shaped authorised unlocking tool adapted to fit the locking ring (30) and in that the special shaping of the locking ring (30) includes the provision of inclined surfaces (31) between the teeth (33) and the openings (32) so that the teeth (33) merge into the openings (32) at one end of each tooth, the inclined surfaces (31) being so positioned that an unauthorised tool simply rises up on the inclined surfaces (31) and does not turn the locking ring (30).

3. A locking ring according to claim 2 characterised in that the locking ring (30) is provided with a stop or stops (34) adapted to engage with a lug on a lug ring on the connector so that when a connector is being applied to the valve mechanism the stop (34) or one of the stops (34) on the locking ring engages with the lug on the lug ring before permitting the connector to be turned too far.

4. A locking ring according to claim 3 characterised in that the locking ring (30) has two teeth (33) and two openings (32).

5. A locking ring according to claim 4 characterised in that a stop (34) is provided below each inclined surface (31).

**Revendications**

1. Mécanisme de soupape destiné à se monter sur un récipient de liquide tel qu'un tonnelet de bière, pour permettre au liquide contenu dans le récipient d'être débité à travers un connecteur par application d'une pression sur le dessus du liquide contenu dans le récipient, ce mécanisme de soupape comprenant un anneau de blocage (30) permettant de fixer le connecteur en place sur le mécanisme de soupape, et l'anneau de blocage (30) comportant des dents courbes (33) inclinées du côté inférieur, et des ouvertures courbes (32) comprises entre les dents (33) mécanisme de soupape caractérisé en ce que les dents (33) de l'anneau de blocage (30) sont spécialement formées pour ne coopérer seulement qu'avec un outil de déblocage autorisé formé spécialement pour s'adapter à l'outil de blocage adapté à l'anneau de blocage (30), et en ce que la forme spéciale de l'anneau de blocage (30) consiste à prévoir des surfaces inclinées (31) entre les dents (33) et les ouvertures (32), de façon que les dents (33) viennent se fondre dans les ouvertures (32) à une extrémité de chaque dent, les surfaces inclinées (31) étant placées de telle manière qu'on outil non autorisé vienne simplement monter en glissant sur les surfaces inclinées sans pouvoir faire tourner l'anneau de blocage.

2. Anneau de blocage (30) destiné à s'utiliser dans un mécanisme de soupape conçu pour se monter sur un récipient de liquid, pour permettre au liquide d'être débité à travers un connecteur par application d'une pression sur les dessus du liquide contenu dans le récipient, cet anneau de blocage (30) étant destiné à fixer le connecteur en place grâce à la présence de dents courbes (33) inclinées du côté inférieur et d'ouvertures courbes (32) comprises entre les dents (33), anneau de blockage caractérisé en ce que les dents (33) de l'anneau de blockage (30) sont spécialement formées pour ne coopérer seulement qu'avec un outil de déblocage autorisé, spécialement formé pour s'adapter à l'anneau de blocage (30), et en ce que la forme spéciale de l'anneau de blocage (30) consiste à prévoir des surfaces inclinées (31) entre les dents (33) et les ouvertures (32), de façon que les dents (33) viennent so fondre dans les ouvertures (32) à une extrémité de chaque dent, les surfaces inclinées (31) étant placées de telle manière qu'on outil non autorisé vienne simplement monter en glissant sur les surfaces inclinées (31) sans pouvoir faire tourner l'anneau de blocage (30).

3. Anneau de blocage selon la revendication 2, caractérisé en ce que l'anneau de blocage (30) est muni d'une ou plusieurs butées (34) desintées à venir en contact avec un ergot porté par un anneau à ergots du connecteur, de telle manière que lorsqu'on monte un connecteur sur le mécanisme de soupape, la butée (34) ou l'une des butées (34) de l'anneau de blocage vienne s'engager contre l'ergot de l'anneau à ergots avant de permettre au connecteur de tourner trop loin.

4. Anneau de blocage selon la revendication 3, caractérisé en ce que l'anneau de blocage (30) comporte deux dents (33) et deux ouvertures (32).

5. Anneau de blocage selon la revendication 4, caractérisé en ce qu'une butée (34) est prévue au-dessous de chaque surface inclinée (31).

**Patentansprüche**

1. Ventil für einen flüssigkeits-gefüllten Behälter wie z.B. ein Bierfaß, mit dem die im Behälter befindliche Flüssigkeit durch Anwendung von Druck im Raum oberhalb der Flüssigkeit durch einen Anschluß entnommen werden kann, wobei das Ventil einen Haltering (30) aufweist, der zur Sicherung des Anschlusses in seiner Stellung auf dem Ventil dient und mit bogenförmigen an ihrer Unterseite schrägen Zähnen (33) und mit bogenförmigen Ausnehmungen (32) zwischen den Zähnen (33) versehen ist, dadurch gekennzeichnet, daß die Zähne (33) des Halteringes (30) ausschließlich für die Zusammenwirking mit einem speziell geformten, zugelassenen Öffnungswerkzeug ausgebildet sind, das dem Verschlußwerkzeug angepasst ist, welches seinerseits in den Haltering (30) passte, und daß bei der Formgebung des Halteringes (30) schräge Flächen (31) zwischen den Zähnen (33) und den Ausnehmungen (32) vorgesehen werden, so daß die Zähne (33) jeweils an einem ihrer Enden in die Ausnehmungen (32) übergehen und die schrägen Flächen (31) so angeordnet sind, daß ein unzulässiges Werkzeug einfach auf den schrägen Flächen aufläuft und den Haltering nicht dreht.

2. Haltering (30) zum Einsatz bei Ventilen von Flüssigkeitsbehältern, mit denen die durch einen Anschluß zu entnehmende Flüssigkeit durch die Anwendung eines Druckes oberhalb der Flüssigkeit im Behälter antnehmbar ist, wobei der Haltering (30) den Anschluß durch die Anordnung von bogenförmigen Zähnen (33), die an ihrer Unterseite schräg ausgebildet sind, und durch bogenförmige Öffnungen (32) zwischen den Zähnen (33) in seiner Lage hält, dadurch gekennzeichnet, daß die Zähne (33) des Halteringes (30) ausschließlich zum Zusammenwirken mit einem speziell geformten zulässigen Öffnungswerkzeug speziell ausgebildet sind, welches in den Haltering passt, und daß bei der Formgebung des Halteringes (30) schräge Flächen (31) zwischen den Zähnen (33) und den Ausnehmungen (32) vorgesehen werden, so daß die Zähne (33) jeweils an einem Ende in die Ausnehmungen (32) übergehen und die schrägen Flächen (31) so angeordnet sind, daß ein unzulässiges Werkzeug einfach auf den schrägen Flächen aufläuft und den Haltering nicht dreht.

3. Haltering nach Anspruch 2, gekennzeichnet durch einen oder mehrere Anschläge (34), die an einem Zapfen eines Zapfenringes des Anschlusses anlegbar sind, so daß beim Aufsetzen eines Anschlusses auf das Ventil der Anschlag (34) oder einer der Anschläge (34) am Haltering mit den Zapfen des Zapfenringes in Eingriff kommt und ein zu weites Drehen des Anschlusses verhindert.

4. Haltering nach Anspruch 3, dadurch gekennzeichnet, daß der Haltering (30) zwei Zähne (33) und zwei Ansnehmungen (32) aufweist.

5. Haltering nach Anspruch 4, dadurch gekennzeichnet, daß ein Anschlag (34) jeweils unterhalb jeder schrägen Fläche (31) vorgesehen ist.

# Fig.1.

Fig.2.

Fig.3a.

Fig.3b.

Fig.3c.

Fig.4a.

Fig.4b.

Fig.4c.

Fig.5.

Fig.6a.

Fig.6b.